# FASCICULE DE BREVET EUROPEEN

(11) **EP 0 908 753 B1**
(45) Date de publication et mention de la délivrance du brevet: **12.05.2004**
(21) Numéro de dépôt: 98402427.3
(22) Date de dépôt: 02.10.1998
(51) Int. Cl.: G02B 26/02

(54) **Systeme de positionnement d'une microstructure optique**
Mikrooptischepositionierungsvorrichtung
Optical microstructure positionning system

(30) Priorité: 06.10.1997 FR 9712423
(43) Date de publication de la demande: 14.04.1999
(73) Titulaire: OPSITECH Optical System on a chip, 38054 Grenoble (FR)
(72) Inventeur: Pouteau, Patrick, 38340 Voreppe (FR); Labeye, Pierre, 38100 Grenoble (FR)
(74) Mandataire: Kremer, Robert A.M.

(56) Documents cités:
- EP-A- 0 712 004
- FR-A- 2 725 038
- US-A- 4 705 349
- US-A- 5 214 727
- PATENT ABSTRACTS OF JAPAN vol. 098, no. 001, 30 janvier 1998 & JP 09 251135 A (FUJIKURA LTD), 22 septembre 1997
- PATENT ABSTRACTS OF JAPAN vol. 097, no. 007, 31 juillet 1997 & JP 09 080329 A (NIPPON TELEGR &TELEPH CORP <NTT>), 28 mars 1997
- PATENT ABSTRACTS OF JAPAN vol. 018, no. 454 (P-1791), 24 août 1994 & JP 06 148536 A (SUMITOMO ELECTRIC IND LTD;OTHERS: 01), 27 mai 1994

## Description

### Domaine technique

L'invention se rapporte au domaine des microstructures optiques et des microtechnologies. Elle concerne en particulier le domaine des commutateurs optiques intégrés. Elle concerne également le domaine des microdispositifs optomécaniques, par exemple des microdéflecteurs.

### Etat de la technique

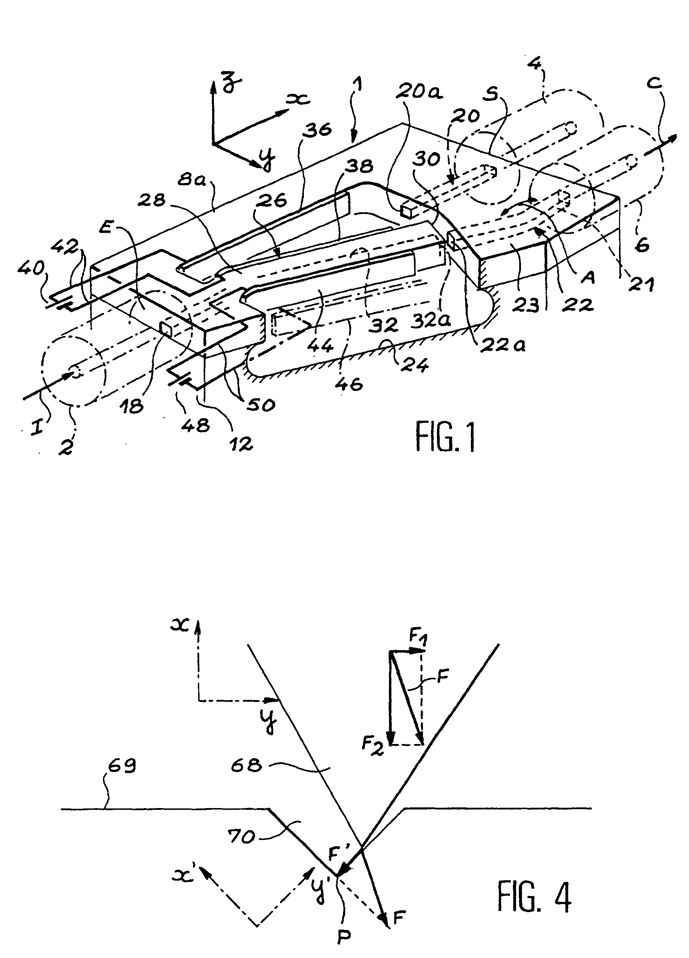

Le document FR-A-2 660 444 divulgue une microstructure optique constituée par un commutateur optique. Il divulgue entre autres le commutateur optique représenté à la figure 1 ci-jointe. Ce dispositif reçoit un faisceau lumineux incident I véhiculé par la fibre 2 et transmet un faisceau commuté C soit vers la fibre 4, soit vers la fibre 6. Le commutateur 1 comprend une structure guide réalisée sur un substrat 12 présentant une face d'entrée E et une face de sortie S. Il comprend un microguide d'entrée 18 et deux microguides de sortie 20 et 22. Les microguides 18 et 20, dans cet exemple, sont parallèles à une direction x parallèle à la plus grande surface 8a de la structure guide. Les microguides 18 et 20 sont déposés dans le prolongement l'un de l'autre et de part et d'autre d'un évidement 24 traversant la structure guide et s'étendant jusque dans le substrat.

Le microguide de sortie 22, situé du même côté de l'évidement 24 que le microguide 20 et adjacent à ce dernier, comporte, du côté de la sortie S du commutateur, une partie 21, parallèle dans cet exemple au microguide 20 et, du côté de l'évidement 24, une partie 23 formant un coude A avec la partie 21. Ainsi, les extrémités d'entrée 20a et 22a respectivement des microguides de sortie 20 et 22, débouchant dans l'évidement 24, sont plus proches l'une de l'autre que leurs extrémités de sortie, affleurant sur la face de sortie S de la structure guide.

L'évidement 24 définit une poutre flexible 26 orientée au repos parallèlement à la direction x. Cette poutre 26 peut se déformer dans l'évidement 24 selon une direction y, parallèle à la surface 8a de la structure guide et perpendiculaire à la direction x. Cette poutre 26 comprend une extrémité fixe 28, solidaire de la structure guide et du substrat 12 et une extrémité libre 30 apte à se déformer dans l'évidement 24. La poutre 26 est définie dans la structure guide et est pourvue d'un microguide central 32 s'étendant sur toute sa longueur et orienté, au repos, parallèlement à la direction x. Ce microguide central 32 est disposé dans le prolongement du microguide d'entrée 18 de sorte que leurs axes longitudinaux parallèles à la direction x soient confondus.

La commutation du faisceau incident véhiculé par le microguide d'entrée 18 vers le microguide de sortie 20 est assurée en amenant l'extrémité libre 32a du microguide central de la poutre en face et en coïncidence avec l'extrémité d'entrée 20a du microguide de sortie 20. De même, la commutation du faisceau incident véhiculé par le microguide d'entrée 18 vers le microguide de sortie 22 est assurée en amenant l'extrémité libre 32a du microguide central en face et en coïncidence avec l'extrémité d'entrée 22a du microguide de sortie 22. C'est cette deuxième configuration qui est représentée sur la figure 1.

Les déformations de la poutre de façon à amener en coïncidence l'extrémité 32a du microguide central avec soit l'extrémité 20a du microguide de sortie 20, soit avec l'extrémité 22a du microguide 22, sont assurées par exemple à l'aide de condensateurs de capacité variable. A cet effet, les surfaces latérales de l'évidement 24, au niveau de la structure guide 8, orientées selon la direction x sont équipées de métallisations respectivement 36 et 46. Par ailleurs, les faces latérales de la poutre 26 en regard, orientées selon la direction x lorsque celle-ci est au repos, sont équipées de métallisations respectivement 38 et 44. Les métallisations 36 et 38 en regard constituent les armatures d'un premier condensateur à capacité variable auquel on peut appliquer une tension, grâce à une source d'alimentation électrique 40 reliée électriquement à ces armatures via des conducteurs 42 disposés à la surface 8a de la structure guide. De même, les métallisations 44 et 46 en regard constituent les armatures d'un second condensateur à capacité variable auquel peut être appliquée une tension, grâce à une source d'alimentation électrique 48 reliée à l'aide de fils conducteurs 50 disposés sur la surface 8a de la structure guide.

L'application d'une tension convenable aux bornes de ces condensateurs crée une force électrostatique parallèle à la direction y et entraînant une déformation de la poutre 26 selon cette direction y.

Un tel commutateur optique peut être réalisé à partir d'un substrat semiconducteur et en utilisant les méthodes de la microélectronique. Ces méthodes permettent d'obtenir de façon collective des commutateurs optiques intégrés.

Actuellement, le problème du positionnement précis du microguide optique de commutation est résolu, soit par le contrôle de la force de commande de la poutre en mouvement, soit par la mise en contact (c'est-à-dire en butée) de deux plans de gravure. La première solution impose de savoir maintenir une force constante et/ou d'asservir la force appliquée en fonction d'un paramètre représentatif de la position. La deuxième solution est sensible aux sous-gravures et surgravures latérales de la structure mécanique.

Le maintien en position du microguide optique de commutation n'est assuré que par le maintien de la force appliquée à la poutre, ce qui impose une consommation d'énergie pour maintenir cette force. Dans le cas d'une force électrostatique, comme c'est le cas pour le dispositif représenté à la figure 1, une fois le condensateur chargé, il faut toujours pallier la décharge à long terme du condensateur.

Le document US-A-5 214 727 divulgue un microswitch électrostatique avec des moyens de commande qui agissent en permanence.

### Exposé de l'invention

L'invention vise à résoudre ces problèmes en proposant un système de positionnement d'une microstructure optique dans un dispositif sous l'action de moyens de commande, comprenant un élément supportant la microstructure optique et relié au dispositif, l'orientation dudit élément par rapport au dispositif étant susceptible de varier sous l'action de moyens de commande afin de placer la microstructure optique dans au moins une position déterminée, des moyens mécaniques d'immobilisation dudit élément par rapport au dispositif étant prévus pour obtenir le maintien de la microstructure optique dans ladite position déterminée lorsque les moyens de commande n'agissent plus.

Avantageusement, les moyens mécaniques d'immobilisation sont conçus pour libérer ledit élément sous l'action des moyens de commande.

De préférence, les moyens mécaniques d'immobilisation comprennent une partie mâle et une partie femelle de forme complémentaire à la partie mâle, l'une desdites parties appartenant audit élément et l'autre partie appartenant au dispositif, le maintien de la microstructure dans ladite position déterminée étant obtenu par pénétration de la partie mâle dans la partie femelle. Selon un mode de réalisation préféré, la partie mâle et la partie femelle présentent des axes de symétrie parallèles à l'axe optique de la microstructure optique. Ainsi, lors de l'immobilisation de la microstructure, les axes de symétrie des parties mâle et femelle se superposent et un défaut de sur - et/ou de sous - gravure des parties mâle ou femelle n'a pas d'incidence sur le positionnement précis de la microstructure. Pour un meilleur fonctionnement, la partie mâle possède une section en forme de pointe, la partie femelle étant un logement de forme complémentaire. Ledit élément peut comprendre au moins une poutre, dite poutre principale, reliée par l'une de ses extrémités au dispositif, son autre extrémité étant libre. Il peut alors comprendre au moins une poutre secondaire, disposée transversalement par rapport à la poutre principale et solidaire de la poutre principale, la poutre secondaire comportant l'une desdites parties des moyens mécaniques d'immobilisation. De préférence, cette poutre secondaire est disposée à l'extrémité libre de la poutre principale. La poutre secondaire peut être fixée par l'une de ses extrémités à la poutre principale, son autre extrémité étant libre et comportant l'une desdites parties des moyens mécaniques d'immobilisation, par exemple la partie mâle. La poutre secondaire peut être telle qu'elle ne se déforme pas lors du déplacement de la microstructure sous l'action des moyens de commande.

Les moyens de commande peuvent être des moyens capacitifs développant une force électrostatique en réponse à une tension électrique de commande. Ils peuvent aussi être des moyens magnétiques et/ou piézoélectriques. Ils permettent le positionnement de l'élément dans la position déterminée.

Les moyens de commande peuvent en outre être utilisés dans certains cas pour coopérer avec les moyens mécaniques pour assurer le maintien de l'élément.

L'invention peut s'appliquer à la réalisation d'un commutateur optique intégré, la microstructure optique étant un microguide optique. Elle peut aussi s'appliquer à la réalisation d'un dispositif à lentille orientable dans au moins une position déterminée, la microstructure optique étant ladite lentille. Elle peut encore s'appliquer à la réalisation d'un dispositif à fibre optique orientable dans au moins une position déterminée, la microstructure optique étant ladite fibre optique. Elle peut enfin s'appliquer à la réalisation d'un dispositif à miroir orientable dans au moins une position déterminée, la microstructure optique étant ledit miroir.

### Brève description des figures

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 est une vue en perspective d'un commutateur optique intégré selon l'art connu,
- les figures 2 et 3 sont des vues de dessus d'un commutateur optique intégré réalisé conformément à la présente invention et dans des états de commutation différents,
- la figure 4 est une vue explicative du fonctionnement du système de positionnement selon la présente invention,
- la figure 5 est une vue de dessus d'une autre variante de commutateur optique intégré réalisé conformément à la présente invention,
- la figure 6 est une vue de dessus d'encore une autre variante de commutateur optique intégré réalisé conformément à la présente invention,
- la figure 7 est une vue de dessus d'un dispositif à lentille orientable réalisé conformément à la présente invention.

### Description détaillée de modes de réalisation de l'invention

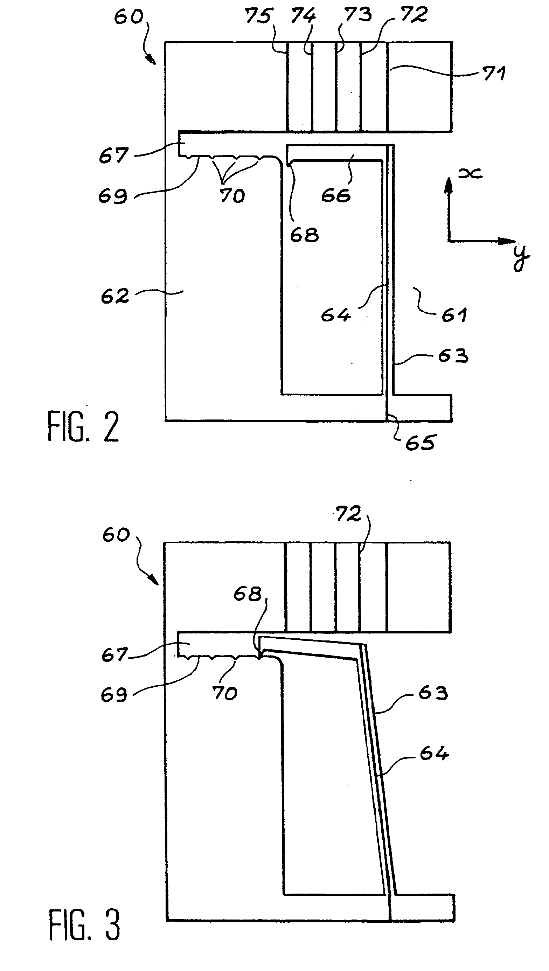

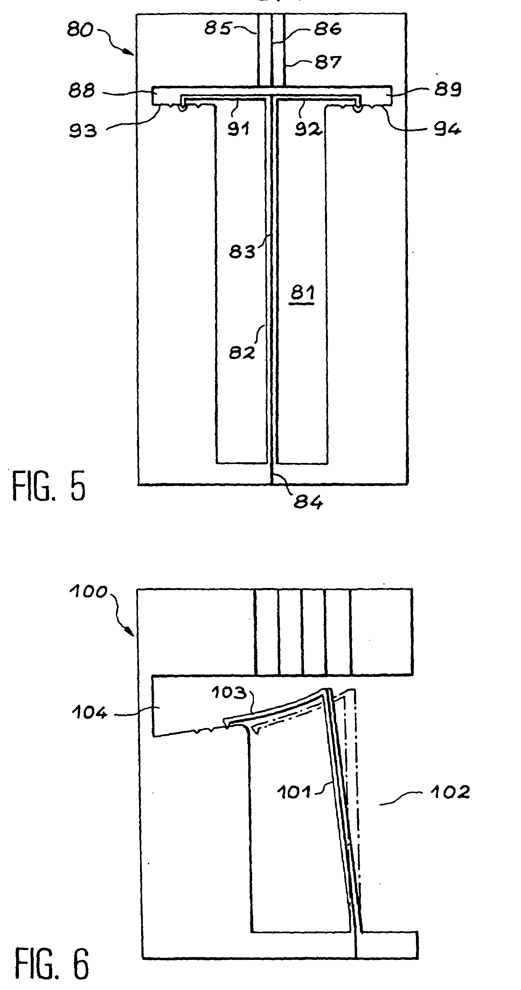

Les figures 2 et 3 représentent, en vue de dessus, un commutateur optique selon l'invention et dans deux états de commutation différents. Ce commutateur est du même type que celui représenté à la figure 1, c'est-à-dire qu'il comprend une poutre orientable et qu'il est réalisé selon les techniques de la micro-électronique. Son procédé de réalisation peut être par exemple du même type que celui décrit dans le document FR-A-2 660 444. Pour une meilleure compréhension de l'invention, les figures 2 et 3 sont des représentations schématiques de l'invention. En particulier, les dimensions et les proportions entre les différentes poutres ne sont pas représentatives de la réalité.

Le commutateur optique 60, représenté sur les figures 2 et 3, comprend un évidement 61, dit évidement principal, réalisé dans la partie supérieure 62 du substrat sur lequel le commutateur a été réalisé. Une poutre 63, dite poutre principale, est rattachée par l'une de ses extrémités à la partie 62 et est apte, par flexion, à se déplacer dans l'évidement principal 61. La poutre principale 63 comporte un microguide optique 64 sur toute sa longueur. Ce microguide optique 64 est en continuité avec le microguide optique 65 de la partie 62. Le microguide optique 65 véhicule le signal optique à commuter vers cinq sorties possibles : les microguides optiques 71 à 75 réalisés dans la partie 62 et dans le plan des microguides 64 et 65. Le microguide 71 est dans l'alignement du microguide 64 ; les microguides 72 à 75 sont décalés par rapport à cet alignement.

L'extrémité libre de la poutre principale 63 se prolonge transversalement par une poutre secondaire 66. De même, l'évidement principal 61 se prolonge, selon l'axe de la poutre secondaire 66, d'un évidement secondaire 67 apte à recevoir la poutre secondaire 66.

L'extrémité libre de la poutre secondaire 66 comporte une partie 68 à section en forme de pointe dite partie mâle. Le bord 69 de l'évidement secondaire 67, en vis-à-vis de la partie mâle 68, est pourvu de logements 70 dits parties femelles. La forme des logements 70 est complémentaire de la forme de la partie mâle 68. Il y a autant de logements 70 que de microguides de sortie décalés.

Sous l'effet d'une force latérale exercée sur la poutre principale 63 en direction de l'évidement secondaire 67, l'extrémité libre de la poutre 63 se déplace en entraînant la poutre secondaire 66 dans l'évidement secondaire 67. La poutre principale 63 fléchit plus ou moins, en fonction de l'amplitude de la force qui s'exerce sur elle. La force latérale est prévue pour que la partie mâle 68 s'engage dans l'une des parties femelles ou logements 70. L'écartement entre les logements 70 est en correspondance avec l'écartement entre les microguides optiques de sortie 71 à 75 pour que la sortie du microguide optique 64 de la poutre principale 63 soit en regard de l'entrée de l'un des microguides 72 à 75.

Une fois les parties mâle et femelle engagées, la poutre principale 63 demeure dans la position déformée. La force latérale appliquée peut être supprimée. Une autre force latérale appliquée à la poutre principale permet la commutation vers un autre microguide optique de sortie.

La force latérale peut être une force électrostatique obtenue par application d'une tension entre électrodes comme cela est décrit dans le document FR-A-2 660 444.

La figure 2 montre le commutateur selon l'invention sans déformation de la poutre principale. Dans ce cas, le microguide 64 est aligné avec le microguide 71. La figure 3 montre le même commutateur avec déformation de la poutre principale de façon que la sortie du microguide 64 soit en regard de l'entrée du microguide 72. Dans ce cas, la partie mâle 68 est engagée dans le premier logement 70 du bord 69 de l'évidement secondaire 67.

Pour déplacer la poutre principale 63, on peut appliquer sur cette poutre une force supérieure à la somme de la force de rappel élastique de la poutre principale et de la force de frottement glissant de la partie mâle 68 sur le bord 69. Eventuellement, une force dans la direction x peut être appliquée sur la poutre secondaire 66 afin de diminuer le coefficient de frottement glissant de la partie mâle 68 sur le bord 69. Cette force sert en fait à faire sortir la partie mâle de son logement quelle que soit sa forme.

La distribution des forces mises en oeuvre est montrée plus en détail à la figure 4. Lorsque la partie mâle 68 est en face d'un logement 70, toutes les forces appliquées peuvent être supprimées. L'élasticité des poutres 63 et 66 donne une force F de rappel qui est décomposable en une force F₁ dans la direction y et une force F₂ dans la direction -x. La conception des deux poutres doit être telle que la somme de ces deux forces ait une composante F' supérieure à la force de frottement glissant entre la partie mâle 68 et la surface locale dS, dans la direction -y'. Ceci permet au sommet de la partie mâle de rester dans le logement 70 et de se déplacer vers le point P. Le maintien est assuré par l'équilibre des forces lorsque la pointe est au fond de son logement. Le microguide optique 64 constituant la microstructure se trouve alors dans la position voulue, entièrement déterminée par le masque de gravure qui a permis de réaliser le commutateur.

On peut, dans certains cas, renforcer le maintien de la partie mâle dans son logement par application d'une force complémentaire générée par les moyens de commande et appliquée à la poutre secondaire 66 dans la direction-x.

Pour modifier la position de la poutre principale, il suffit d'ajouter aux forces F₁ et/ou F₂ une force extérieure pour modifier le rapport de force.

La section de la partie mâle peut avoir la forme d'une pointe, d'une pointe arrondie ou prendre d'autres formes. Une section en forme de pointe symétrique est la plus avantageuse.

L'action d'une sous-gravure ou d'une surgravure latérale ne modifie pas fondamentalement l'état d'équilibre lorsque la partie mâle est dans l'un de ses logements. En particulier, la position sur l'axe y de la partie mâle dans son logement reste la même.

Tant que les surfaces mécaniques restent en contact (partie mâle dans le logement), il n'y a pas de variation du couplage. Le système est a priori moins sensible aux vibrations. Tant que les forces d'inertie engendrées par exemple par les vibrations ne modifient pas le rapport des forces, la microstructure optique reste en position.

A titre d'exemple, les différentes parties du système selon l'invention peuvent avoir les dimensions suivantes :
- pour une poutre 63 réalisée en silice : largeur 50 µm et longueur 2 mm,
- pour la poutre 66 : largeur 75 µm et longueur 300 µm,
- hauteur de la partie mâle : 15 µm,
- angle de la section en forme de pointe symétrique pour la partie mâle : 45°,
- angle de la section du logement symétrique : 90°,
- espacement des logements 15 µm.

La figure 5 représente une autre variante de réalisation d'un commutateur optique intégré selon l'invention. Le système de positionnement de ce commutateur optique a la particularité d'être symétrique. Le commutateur 80 présente un évidement principal 81 qui permet de définir une poutre principale 82 comportant un microguide optique 83 en continuité avec le microguide optique d'entrée 84. Ce commutateur présente trois sorties possibles : les microguides optiques 85, 86 et 87. Le microguide de sortie 86 est normalement aligné avec les microguides 83 et 84 lorsqu'aucune force n'est appliquée à la poutre principale 82. Les microguides de sortie 85 et 87 sont situés de part et d'autre du microguide 86. L'évidement 81 se prolonge, vers l'extrémité libre de la poutre principale 82, de deux évidements secondaires 88 et 89 d'axes perpendiculaires à l'axe de l'évidement principal 81 et situés de part et d'autre de cet évidement principal. De même, deux poutres secondaires 91 et 92 prolongent perpendiculairement la poutre principale 82. Chaque évidement secondaire 88, 89 possède un bord respectivement 93, 94 pourvu de logements pour la réception des parties mâles terminant les poutres secondaires 91 et 92.

Lorsque les poutres secondaires sont réalisées dans la même pièce que le reste de la structure, les logements aptes à recevoir les parties mâles, en position de repos de la poutre 82, doivent être élargis pour permettre le détachement des parties mâles lors de leur réalisation.

Des condensateurs peuvent être réalisés en métallisant les bords de la poutre 82 et les bords opposés de l'évidement 81. On peut ainsi développer, par application d'une tension électrique, des forces électrostatiques sur la poutre 82 comme l'enseigne le document FR-A-2 660 444.

La variante de réalisation du commutateur optique représentée à la figure 6 est pratiquement identique à celle des figures 2 et 3. Le commutateur 100 présente une poutre principale 101 définie par l'évidement 102 et une poutre secondaire 103 dont l'extrémité libre peut se déplacer dans l'évidement secondaire 104. En l'absence de force appliquée sur la poutre principale 101, celle-ci se trouve dans la position représentée en trait mixte. En trait plein, on a représenté la poutre principale dans une position commutée. On remarque que l'axe de la poutre secondaire 103 n'est pas perpendiculaire à l'axe de la poutre principale 101. La poutre secondaire 103 a aussi été dimensionnée pour ne pas se déformer pendant le mouvement de la poutre principale. Ceci implique que le point de liaison entre les deux poutres ne se déforme pas. Cette particularité peut être utilisée pour éviter une déformation de la microstructure optique déplacée par la poutre principale.

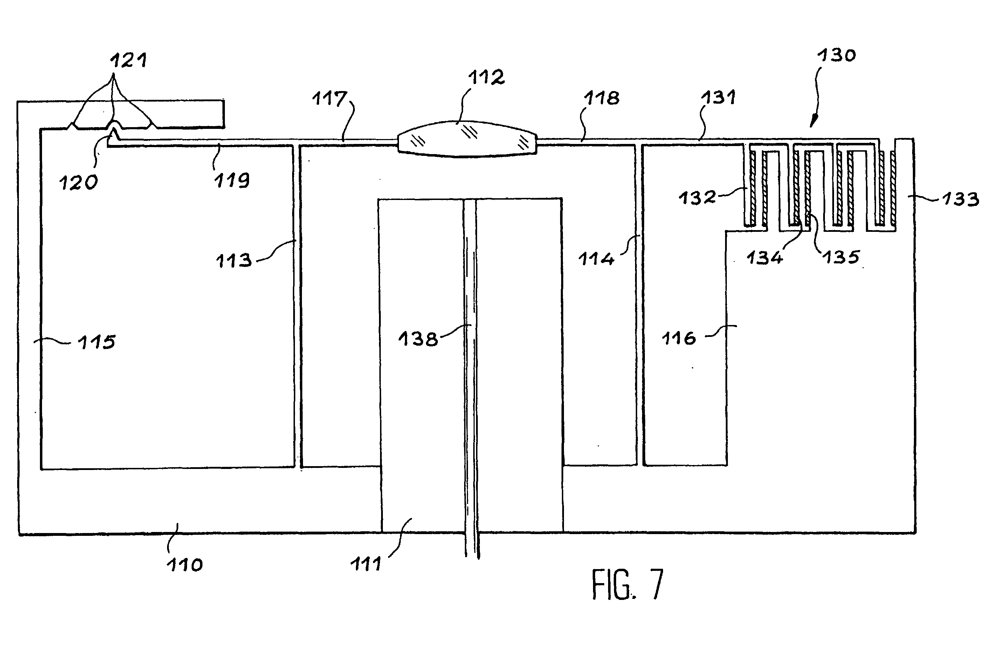

Le dispositif représenté à la figure 7 a été obtenu par gravure d'un substrat en forme de parallélépipède. La gravure a défini une partie 110 faisant office de support, à laquelle sont raccordés un corps central 111, deux poutres principales 113 et 114, un prolongement gauche 115 et un prolongement droit 116. La gravure a aussi défini une lentille cylindrique 112 raccordée par deux bras symétriques 117 et 118 aux extrémités libres des poutres principales, respectivement 113 et 114. La poutre principale 113 est prolongée d'une poutre secondaire 119, dans l'axe du bras 117. L'extrémité libre de la poutre secondaire 119 comporte une partie mâle 120 à section en forme de pointe centrée sur un axe parallèle à la poutre principale 113. La partie mâle 120 se trouve engagée dans l'un des logements ou parties femelles 121 de forme correspondante à la partie mâle 120 et gravées dans la partie terminale du prolongement gauche 115. Le logement correspondant à la position de repos est plus large que les autres logements afin de permettre la réalisation de la partie mâle.

Le dispositif comporte aussi un peigne électrostatique de commande 130. Le peigne 130 comprend un bras 131 obtenu lors de la gravure et raccordé à l'extrémité libre de la poutre principale 114. Le bras 131 se prolonge perpendiculairement par des porte-électrodes 132. Le prolongement droit 116 se termine également par des porte-électrodes 133 alternant avec les porte-électrodes 132. Des électrodes 134,135 sont déposées sur les porte-électrodes respectivement 132, 133. Ces électrodes sont reliées à une tension de commande.

La surface supérieure du corps central 111 est pourvue d'un sillon pour la réception d'une fibre optique 138. La gravure de ce corps central a été prévue pour que l'extrémité de sortie de la fibre optique soit centrée sur la lentille 112 en position de repos.

Comme pour les exemples précédents, on comprend que la microstructure optique constituée par la lentille 112 peut, sous l'effet d'une force électrostatique communiquée par le peigne de commande 130, se déplacer par rapport à la sortie de la fibre optique 138.

## Revendications

1. Système de positionnement d'une microstructure optique (64,83,112) dans un dispositif (60,80,100) sous l'action de moyens de commande (130), comprenant un élément flexible (63,82;113,114,117,118) supportant la microstructure optique et relié au dispositif, l'orientation dudit élément flexible par rapport au dispositif étant susceptible de varier sous l'action de moyens de commande afin de placer la microstructure optique dans au moins une position déterminée,
**caractérisé en ce que** des moyens mécaniques d'immobilisation (68,70;120,121) dudit élément flexible par rapport au dispositif sont prévus pour obtenir le maintien de la microstructure optique dans ladite position déterminée lorsque les moyens de commande n'agissent plus.

2. Système de positionnement selon la revendication 1, **caractérisé en ce que** les moyens mécaniques d'immobilisation (68,70;120,121) sont conçus pour libérer ledit élément flexible sous l'action des moyens de commande.

3. Système de positionnement selon l'une des revendications 1 ou 2, **caractérisé en ce que** les moyens mécaniques d'immobilisation comprennent une partie mâle (68,120) et une partie femelle (70,121) de forme complémentaire à la partie mâle, l'une desdites parties appartenant audit élément flexible et l'autre partie appartenant au dispositif, le maintien de la microstructure dans ladite position déterminée étant obtenu par pénétration de la partie mâle dans la partie femelle.

4. Système de positionnement selon la revendication 3, **caractérisé en ce que** ladite partie mâle et ladite partie femelle présentent des axes de symétrie parallèles à l'axe optique de la microstructure optique.

5. Système de positionnement selon l'une des revendications 3 ou 4, **caractérisé en ce que** la partie mâle (68,120) possède une section en forme de pointe, la partie femelle (70,121) étant un logement de forme complémentaire.

6. Système de positionnement selon l'une quelconque des revendications 3 à 5, **caractérisé en ce que** ledit élément flexible comprend au moins une poutre (63;82;113,114), dite poutre principale, reliée par l'une de ses extrémités au dispositif, son autre extrémité étant libre.

7. Système de positionnement selon la revendication 6, **caractérisé en ce que** ledit élément flexible comprend au moins une poutre secondaire (66;91,92;103;119), disposée transversalement par rapport à la poutre principale (63;82;101;113,114) et solidaire de la poutre principale, la poutre secondaire comportant l'une desdites parties des moyens mécaniques d'immobilisation (68, 120).

8. Système de positionnement selon la revendication 7, **caractérisé en ce que** la poutre secondaire (66;91,92;103;119) est disposée à l'extrémité libre de la poutre principale (63,82,101,113).

9. Système de positionnement selon l'une des revendications 7 ou 8, **caractérisé en ce que**, la poutre secondaire (66;91,92;103;119) étant fixée par l'une de ses extrémités à la poutre principale (63,82,101,113), son autre extrémité est libre et comporte l'une desdites parties des moyens mécaniques d'immobilisation.

10. Système de positionnement selon la revendication 9, **caractérisé en ce que** la poutre secondaire comporte la partie mâle (68,120) des moyens mécaniques d'immobilisation.

11. Système de positionnement selon l'une quelconque des revendications 7 à 10, **caractérisé en ce que** la poutre secondaire (103) est telle qu'elle ne se déforme pas lors du déplacement de la microstructure sous l'action des moyens de commande.

12. Système de positionnement selon l'une quelconque des revendications 1 à 11, **caractérisé en ce que** les moyens de commande (130) sont des moyens capacitifs développant une force électrostatique en réponse à une tension électrique de commande.

13. Système de positionnement selon l'une quelconque des revendications 1 à 11, **caractérisé en ce que** les moyens de commande sont des moyens magnétiques et/ou piézoélectriques.

14. Système de positionnement selon l'une quelconque des revendications 1 à 12, **caractérisé en ce que** les moyens de commande coopèrent avec les moyens mécaniques pour assurer le maintien dudit élément.

15. Application du système de positionnement selon l'une quelconque des revendications 1 à 14 à la réalisation d'un commutateur optique intégré (60,80,100), la microstructure optique étant un microguide optique (64,83).

16. Application du système de positionnement selon l'une quelconque des revendications 1 à 14 à la réalisation d'un dispositif à lentille orientable dans au moins une position déterminée, la microstructure optique étant ladite lentille (112).

17. Application du système de positionnement selon l'une quelconque des revendications 1 à 14 à la réalisation d'un dispositif à fibre optique orientable dans au moins une position déterminée, la microstructure optique étant ladite fibre optique.

18. Application du système de positionnement selon l'une quelconque des revendications 1 à 14 à la réalisation d'un dispositif à miroir orientable dans au moins une position déterminée, la microstructure optique étant ledit miroir.

## Claims

1. System for the positioning of an optical microstructure (64, 83, 112) within a device (60, 80, 100) under the action of control means (130), comprising a flexible element (63, 82; 113, 114, 117, 118) supporting the optical microstructure and connected to the device, the orientation of the said flexible element with respect to the device being able to vary under the action of control means in order to place the optical microstructure in at least one specified position, **characterized in that** mechanical means (68, 70; 120, 121) for immobilizing the said flexible element with respect to the device are provided such that the optical microstructure is held in the said specified position when the control means no longer act.

2. Positioning system according to Claim 1, **characterized in that** the mechanical immobilizing means (68, 70; 120, 121) are designed to release the said flexible element under the action of the control means.

3. Positioning system according to either of Claims 1 and 2, **characterized in that** the mechanical immobilizing means comprise a male part (68, 120) and a female part (70, 121) of complementary shape to the male part, one of the said parts belonging to the said flexible element and the other part belonging to the device, the microstructure being held in the said specified position by the penetration of the male part into the female part.

4. Positioning system according to Claim 3, **characterized in that** the said male part and the said female part have axes of symmetry parallel to the optical axis of the optical microstructure.

5. Positioning system according to either of Claims 3 and 4, **characterized in that** the said male part (68, 120) has a cross section in the shape of a point, the female part (70, 121) being a recess of complementary shape.

6. Positioning system according to any one of Claims 3 to 5, **characterized in that** the said flexible element comprises at least one beam (63; 82; 113, 114), known as the main beam, connected by one of its ends to the device, its other end being free.

7. Positioning system according to Claim 6, **characterized in that** the said flexible element comprises at least one secondary beam (66; 91, 92; 103; 119), disposed transversely with respect to the main beam (63; 82; 101; 113, 114) and being integral with the main structure, the secondary beam comprising one of the said parts of the mechanical immobilizing means (68, 120).

8. Positioning system according to Claim 7, **characterized in that** the secondary beam (66; 91, 92; 103; 119) is disposed at the free end of the main beam (63, 82, 101, 113).

9. Positioning system according to either of Claims 7 and 8, **characterized in that**, since the secondary beam (66; 91, 92; 103; 119) is fixed at one of its ends to the main beam (63, 82, 101, 113), its other end is free and comprises one of the said parts of the mechanical immobilizing means.

10. Positioning system according to Claim 9, **characterized in that** the secondary beam comprises the male part (68, 120) of the mechanical immobilizing means.

11. Positioning system according to any one of Claims 7 to 10, **characterized in that** the secondary beam (103) is such that it does not deform during displacement of the microstructure under the action of the control means.

12. Positioning system according to any one of Claims 1 to 11, **characterized in that** the control means (130) are capacitive means that develop an electrostatic force in response to an electrical control voltage.

13. Positioning system according to any one of Claims 1 to 11, **characterized in that** the control means are magnetic and/or piezoelectric means.

14. Positioning system according to any one of Claims 1 to 12, **characterized in that** the control means cooperate with the mechanical means in order to hold the said element in position.

15. Application of the positioning system according to any one of Claims 1 to 14 to the fabrication of an integrated optical switch (60, 80, 100), the optical microstructure being an optical microguide (64, 83).

16. Application of the positioning system according to any one of Claims 1 to 14 to the fabrication of a device with a swivel lens that can be oriented in at least one specified position, the optical microstructure being the said lens (112).

17. Application of the positioning system according to any one of Claims 1 to 14 to the fabrication of a device with an optical fibre that can be oriented in at least one specified position, the optical microstructure being the said optical fibre.

18. Application of the positioning system according to any one of Claims 1 to 14 to the fabrication of a device with a swivel mirror that can be oriented in at least one specified position, the optical microstructure being the said mirror.

## Patentansprüche

1. System zur Positionierung einer optischen Mikrostruktur (64, 83, 112) in einer Vorrichtung (60, 80, 100) unter der Wirkung von Steuermitteln (130), wobei dieses System ein flexibles Element (63, 82; 113, 114, 117, 118) umfasst, auf dem die optischem Mikrostruktur befestigt ist und das mit der Vorrichtung verbunden ist, wobei sich die Ausrichtung des flexiblen Elements gegenüber der Vorrichtung unter der Einwirkung der Steuermittel in der Weise ändern kann, dass die optische Mikrostruktur in mindestens eine bestimmte Position gebracht wird, wobei diese Position sich dadurch auszeichnet, dass mechanische Mittel (68, 70; 120, 121) zur Blockierung des flexiblen Elements gegenüber der Vorrichtung vorgesehen sind, um die optische Mikrostruktur in der besagten bestimmten Position zu halten, wenn die Steuermittel nicht mehr wirken.

2. Positionierungssystem nach Anspruch 1, **dadurch gekennzeichnet, dass** die mechanischen Blockierungsmittel (68, 70; 120, 121) derart konzipiert sind, dass sie das flexible Element unter Einwirkung der Steuermittel freigeben.

3. Positionierungssystem nach einem der Ansprüche 1 oder 2, **dadurch gekennzeichnet, dass** die mechanischen Blockierungsmittel einen männlichen Teil (68, 120) sowie einen weiblichen Teil (70, 121) umfassen, dessen Form die des männlichen Teils ergänzt, wobei einer der Teile zum flexiblen Element und der andere zur Vorrichtung gehört, wobei die Mikrostruktur durch Eindringen des männlichen Teils in den weiblichen Teil in der bestimmten Position gehalten wird.

4. Positionierungssystem nach Anspruch 3, **dadurch gekennzeichnet, dass** der männliche und der weibliche Teil Symmetrieachsen aufweisen, die parallel zur optischen Achse der optischen Mikrostruktur verlaufen.

5. Positionierungssystem nach einem der Ansprüche 3 oder 4, **dadurch gekennzeichnet, dass** der männliche Teil (68, 120) einen Abschnitt in spitzer Form besitzt, wobei der weibliche Teil (70, 121) eine dazu ergänzende Vertiefung ist.

6. Positionierungssystem nach einem der Ansprüche 3 bis 5, **dadurch gekennzeichnet, dass** das flexible Element mindestens eine Strebe (63; 82; 113, 114), genannt Hauptstrebe, umfasst, die an einem ihrer Enden mit der Vorrichtung verbunden ist, wobei ihr anderes Ende frei ist.

7. Positionierungssystem nach Anspruch 6, **dadurch gekennzeichnet, dass** das flexible Element mindestens eine Zweitstrebe umfasst (66; 91, 92; 103; 119), die quer zur Hauptstrebe (63; 82; 101; 113, 114) angeordnet ist und mit dieser fest verbunden ist, wobei die Zweitstrebe einen der Teile der mechanischen Blockierungsmittel (68, 120) umfasst.

8. Positionierungssystem nach Anspruch 7, **dadurch gekennzeichnet, dass** die Zweitstrebe (66; 91, 92; 103; 119) am freien Ende der Hauptstrebe (63, 82, 101, 113) angeordnet ist.

9. Positionierungssystem nach Anspruch 7 oder 8, **dadurch gekennzeichnet, dass** die Zweitstrebe (66; 91, 92; 103; 119) an einem ihrer Enden an der Hauptstrebe (63, 82, 101, 113) befestigt ist, wobei ihr anderes Ende frei ist und einen der Teile der mechanischen Blockierungsmittel umfasst.

10. Positionierungssystem nach Anspruch 9, **dadurch gekennzeichnet, dass** die Zweitstrebe den männlichen Teil (68, 120) der mechanischen Blockierungsmittel umfasst.

11. Positionierungssystem nach einem der Ansprüche 7 bis 10, **dadurch gekennzeichnet, dass** die Zweitstrebe (103) derart gestaltet ist, dass sie sich während der Bewegung der Mikrostruktur unter Einwirkung der Steuermittel nicht verformt.

12. Positionierungssystem nach einem der Ansprüche 1 bis 11, **dadurch gekennzeichnet, dass** die Steuermittel (130) kapazitive Mittel sind, die in Reaktion auf eine elektrische Steuerspannung eine elektrostatische Kraft entwickeln.

13. Positionierungssystem nach einem der Ansprüche 1 bis 11, **dadurch gekennzeichnet, dass** die Steuermittel magnetische und/oder piezoelektrische Mittel sind.

14. Positionierungssystem nach einem der Ansprüche 1 bis 12, **dadurch gekennzeichnet, dass** die Steuermittel mit den mechanischen Mitteln zusammenarbeiten, um das Element zu halten.

15. Verwendung des Positionierungssystems nach einem der Ansprüche 1 bis 14 bei der Verwirklichung eines integrierten optischen Schalters (60, 80, 100), wobei die optische Mikrostruktur ein optischer Wellenleiter (64, 83) ist.

16. Verwendung des Positionierungssystems nach einem der Ansprüche 1 bis 14 bei der Verwirklichung einer Vorrichtung mit einer in mindestens eine bestimmte Position schwenkbaren Linse, wobei die optische Mikrostruktur diese Linse ist (112).

17. Verwendung des Positionierungssystems nach einem der Ansprüche 1 bis 14 bei der Verwirklichung einer Vorrichtung mit in mindestens eine bestimmte Position schwenkbaren Glasfasern, wobei die optische Mikrostruktur diese Glasfaser ist.

18. Verwendung des Positionierungssystems nach einem der Ansprüche 1 bis 14 bei der Verwirklichung einer Vorrichtung mit einem in mindestens eine bestimmte Position schwenkbaren Spiegel, wobei die optische Mikrostruktur dieser Spiegel ist.
